(19) Europäisches Patentamt
European Patent Office
Office européen des brevets

(11) **EP 4 336 909 A1**

(12) **EUROPEAN PATENT APPLICATION**
published in accordance with Art. 153(4) EPC

(43) Date of publication:
**13.03.2024 Bulletin 2024/11**

(21) Application number: **22806534.8**

(22) Date of filing: **28.04.2022**

(51) International Patent Classification (IPC):
***H04W 52/02*** (2009.01)

(52) Cooperative Patent Classification (CPC):
**H04W 52/02;** Y02D 30/70

(86) International application number:
**PCT/CN2022/090002**

(87) International publication number:
**WO 2022/237565 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021 CN 202110507782**

(71) Applicant: **Huawei Technologies Co., Ltd.
Shenzhen, Guangdong 518129 (CN)**

(72) Inventor: **QIAO, Yunfei
Shenzhen, Guangdong 518129 (CN)**

(74) Representative: **Huawei European IPR
Huawei Technologies Duesseldorf GmbH
Riesstraße 25
80992 München (DE)**

(54) **METHOD AND APPARATUS FOR POWER SAVING MODE TRANSMISSION**

(57) This application provides a method and an apparatus for power saving mode PSM transmission, to help reduce power loss of a communication apparatus. The method includes: A first communication apparatus sends a first request message to a second communication apparatus, where the first request message is for requesting to enter a PSM mode. The second communication apparatus sends a first response message to the first communication apparatus based on the first request message, where the first response message includes first indication information and second indication information, the first indication information indicates the first communication apparatus to enter the PSM mode, the second indication information indicates X wakeup occasion windows for the first communication apparatus in the PSM mode, and X is greater than or equal to 0. The first communication apparatus enters the PSM mode based on the first response message. wakeup

500

FIG. 5

## Description

This application claims priority to Chinese Patent Application No. 202110507782.8, filed with the China National Intellectual Property Administration on May 10, 2021 and entitled "METHOD AND APPARATUS FOR POWER SAVING MODE TRANSMISSION", which is incorporated herein by reference in its entirety.

## TECHNICAL FIELD

This application relates to the field of communication technologies, and more specifically, to a method and an apparatus for power saving mode (power saving mode, PSM) transmission.

## BACKGROUND

A PSM is a new low power mode introduced in an internet of things (internet of things, IoT) scenario. When a communication apparatus has no service data to process and expects to enter the PSM mode, the communication apparatus may request PSM information from a network. After obtaining the PSM information, the communication apparatus may enter the PSM mode. In the PSM mode, the communication apparatus is unreachable, that is, the network cannot communicate with the communication apparatus, so that the communication apparatus enters a long-term deep sleep state, to achieve the purpose of power loss reduction.

Currently, after a PSM cycle ends, or when the communication apparatus has service data for transmission, the communication apparatus may exit the PSM mode to transit to a connected state. However, in a satellite communication system, because a satellite base station moves at a high speed, when the communication apparatus exits the PSM mode, there may be no satellite base station that is in a cell where the communication apparatus is currently located and that can communicate with the communication apparatus, in other words, the communication apparatus exits the PSM mode at an inappropriate time point. As a result, a waste of power is caused.

## SUMMARY

This application provides a method and an apparatus for power saving mode PSM transmission, to help a communication apparatus wake up from a PSM mode at an appropriate time point, to reduce a waste of power.

According to a first aspect, a method for power saving mode PSM transmission is provided. The method includes: A first communication apparatus sends a first request message, where the first request message is for requesting to enter a PSM mode. The first communication apparatus receives a first response message, where the first response message includes first indication information and second indication information, the first indication information indicates the first communication apparatus to enter the PSM mode, the second indication information indicates X wakeup occasion windows for the first communication apparatus in the PSM mode, and X is greater than or equal to 0. The first communication apparatus enters the PSM mode based on the first response message.

In embodiments of this application, when receiving the first indication information indicating to enter the PSM mode, the first communication apparatus further receives the indicated X wakeup occasion windows for the first communication apparatus in the PSM mode. In the wakeup occasion window, the first communication apparatus may temporarily wake up to process uplink and downlink service data. In this way, the first communication apparatus may wake up in an appropriate period, to reduce power loss of the first communication apparatus.

With reference to the first aspect, in some implementations of the first aspect, when X is greater than 0, the second indication information includes a start time point and an end time point of each of the X wakeup occasion windows, or a start time point and duration of each wakeup occasion window.

In embodiments of this application, the first communication apparatus may determine an appropriate wakeup occasion window based on the start time point and the end time point or the start time point and the duration of each indicated wakeup occasion window. In this way, the indication is simple and intuitive, facilitating processing performed by the first communication apparatus.

With reference to the first aspect, in some implementations of the first aspect, after the first communication apparatus enters the PSM mode based on the first response message, if the first communication apparatus has to-be-sent service data, the first communication apparatus sends the service data in a first wakeup occasion window of the X wakeup occasion windows.

In embodiments of this application, if the first communication apparatus in the PSM mode has the to-be-sent service data, the first communication apparatus may select the first wakeup occasion window from the X wakeup occasion windows to send the service data. This facilitates normal transmission of the service data, and reduces power loss.

With reference to the first aspect, in some implementations of the first aspect, the first response message is an attach accept message or a tracking area update accept message.

In embodiments of this application, the second indication information indicating the X wakeup occasion windows may be transmitted via the attach accept message or the tracking area update accept message, to help reduce signaling overheads.

With reference to the first aspect, in some implementations of the first aspect, the first communication apparatus receives information about first duration, where the first duration indicates delay time of the PSM mode. That the first communication apparatus enters the PSM mode based on the first response message includes: After receiving the first response message, the first communication apparatus enters the PSM mode after the first duration elapses.

In embodiments of this application, there is the delay time, that is, the first duration, before the first communication apparatus enters the PSM mode, and the first communication apparatus enters the PSM mode after the first duration elapses. This helps the first communication apparatus receive a paging message before entering the PSM mode.

With reference to the first aspect, in some implementations of the first aspect, the first communication apparatus receives information about second duration, where the second duration indicates duration of the PSM mode. After entering the PSM mode, the first communication apparatus exits the PSM mode after the second duration elapses.

In embodiments of this application, the first communication apparatus may exit the PSM mode after the second duration elapses, to avoid that the first communication apparatus does not update location information in a timely manner because the first communication apparatus is in the PSM mode for a long time.

According to a second aspect, a method for power saving mode PSM transmission is provided. The method includes: A second communication apparatus receives a first request message, where the first request message is for requesting to enter a PSM mode. The second communication apparatus sends a first response message, where the first response message includes first indication information and second indication information, the first indication information indicates a first communication apparatus to enter the PSM mode, the second indication information indicates X wakeup occasion windows for the first communication apparatus in the PSM mode, and X is greater than or equal to 0.

With reference to the second aspect, in some implementations of the second aspect, when X is greater than 0, the second indication information includes a start time point and an end time point of each of the X wakeup occasion windows, or a start time point and duration of each wakeup occasion window.

With reference to the second aspect, in some implementations of the second aspect, the first response message is an attach accept message or a tracking area update accept message.

With reference to the second aspect, in some implementations of the second aspect, the second communication apparatus sends information about first duration, where the first duration indicates delay time of the PSM mode.

With reference to the second aspect, in some implementations of the second aspect, the second communication apparatus sends information about second duration, where the second duration indicates duration of the PSM mode.

According to a third aspect, a method for monitoring a paging message is provided. The method includes: A first communication apparatus sends a second request message, where the second request message is for requesting a monitoring occasion of a paging message. The first communication apparatus receives a second response message, where the second response message includes third indication information or fourth indication information, the third indication information indicates a paging cycle in which the first communication apparatus monitors the paging message, and the fourth indication information indicates a time period in which the first communication apparatus stops monitoring the paging message. The first communication apparatus monitors the paging message based on the second response message.

In embodiments of this application, the third indication information or the fourth indication information may indicate an occasion on which the first communication apparatus monitors the paging message or stops monitoring the paging message. In this way, the first communication apparatus does not monitor the paging message when there is no network connection, to reduce a waste of power consumption.

With reference to the third aspect, in some implementations of the third aspect, the fourth indication information includes a start time point and an end time point of the period in which monitoring of the paging message is stopped, or a start time point and duration of the period in which monitoring of the paging message is stopped.

With reference to the third aspect, in some implementations of the third aspect, that the first communication apparatus monitors the paging message based on the second response message includes: The first communication apparatus determines, from at least one paging cycle based on the third indication information, a target paging cycle in which the paging message is monitored. The first communication apparatus monitors the paging message in the target paging cycle.

In embodiments of this application, the first communication apparatus has at least one paging cycle, but the paging message may not be monitored in a specific paging cycle. Therefore, the third indication information may indicate the target paging cycle of the at least one paging cycle in which the paging message may be monitored. This helps reduce power loss.

With reference to the third aspect, in some implementations of the third aspect, that the first communication apparatus monitors the paging message based on the second response message includes: The first communication apparatus determines, based on the fourth indication information, a period in which monitoring of the paging message is stopped. The first communication apparatus continues to monitor the paging message after the period in which monitoring of the paging message is stopped elapses.

In embodiments of this application, the fourth indication information may indicate the period in which monitoring of the paging message is stopped. In the period in which monitoring of the paging message is stopped, the first communication apparatus cannot monitor the paging message. Therefore, the first communication apparatus does not need to perform monitoring in the period in which monitoring of the paging message is stopped. This helps reduce power loss.

According to a fourth aspect, a method for monitoring a paging message is provided. The method includes: A second communication apparatus receives a second request message, where the second request message is for requesting a monitoring occasion of a paging message. The second communication apparatus sends a second response message, where the second response message includes third indication information or fourth indication information, the third indication information indicates a paging cycle in which a first communication apparatus monitors the paging message, and the fourth indication information indicates a period in which the first communication apparatus stops monitoring the paging message.

With reference to the fourth aspect, in some implementations of the fourth aspect, the fourth indication information includes a start time point and an end time point or a start time point and duration of the period in which monitoring of the paging message is stopped.

With reference to the fourth aspect, in some implementations of the fourth aspect, the second communication apparatus receives a paging message, where the paging message includes a period indicating the second communication apparatus to stop sending the paging message. The second communication apparatus stops sending the paging message in the period in which the second communication apparatus stops sending the paging message.

According to a fifth aspect, an apparatus for power saving mode PSM transmission is provided, configured to perform the method according to any possible implementation of any one of the foregoing aspects. Specifically, the apparatus includes a module configured to perform the method according to any possible implementation of any one of the foregoing aspects.

In a design, the apparatus may include modules for one-to-one correspondingly performing the methods/operations/steps/actions described in the foregoing aspects. The module may be a hardware circuit, or may be software, or may be implemented by a hardware circuit in combination with software.

In another design, the apparatus is a communication chip. The communication chip may include an input circuit or an interface configured to send information or data, and an output circuit or an interface configured to receive information or data.

In another design, the apparatus is a communication device, including a transmitter configured to send information or data and a receiver configured to receive information or data.

In another design, the apparatus is configured to perform the method according to any one of the foregoing aspects or the possible implementations of the foregoing aspects. The apparatus may be configured in the first communication apparatus or the second communication apparatus, or the apparatus is the first communication apparatus or the second communication apparatus.

According to a sixth aspect, another apparatus for power saving mode PSM transmission is provided, including a processor and a memory. The memory is configured to store a computer program, and the processor is configured to invoke the computer program from the memory and run the computer program, so that the apparatus performs the method according to any possible implementation of any one of the foregoing aspects.

Optionally, there are one or more processors, and there are one or more memories.

Optionally, the memory may be integrated with the processor, or the memory and the processor are separately disposed.

Optionally, the communication device further includes a transmitter (transmitter) and a receiver (receiver). The transmitter and the receiver may be disposed separately, or may be integrated together, and are referred to as a transceiver (transceiver).

According to a seventh aspect, a communication system is provided, including: an apparatus configured to implement the method according to any one of the first aspect or the possible implementations of the first aspect, and an apparatus configured to implement the method according to any one of the second aspect or the possible implementations of the second aspect; or including an apparatus configured to implement the method according to any one of the third aspect or the possible implementations of the third aspect, and an apparatus configured to implement the method according to any one of the fourth aspect or the possible implementations of the fourth aspect.

In a possible design, the communication system may further include a device that interacts with the first communication apparatus and/or the second communication apparatus in the solutions provided in embodiments of this application.

According to an eighth aspect, a computer program product is provided. The computer program product includes a computer program (which may also be referred to as code or instructions). When the computer program is run, a computer is enabled to perform the method according to any possible implementation of any one of the foregoing aspects.

According to a ninth aspect, a computer-readable medium is provided. The computer-readable medium stores a computer program (which may also be referred to as code or instructions). When the computer program is run on a computer, the computer is enabled to perform the method according to any possible implementation of any one of the foregoing aspects.

According to a tenth aspect, a communication apparatus is provided, including a communication interface and a logic circuit. The communication interface is configured to send a first request message and/or receive a first response message, and the logic circuit is configured to enter a PSM based on the first response message, to perform the method according to any possible implementation of the first aspect.

According to an eleventh aspect, another communication apparatus is provided, including a communication interface and a logic circuit. The communication interface is configured to receive a first request message and/or send a first response message. The logic circuit is configured to transmit a PSM based on the first request message to perform the method according to any possible implementation of the second aspect.

According to a twelfth aspect, still another communication apparatus is provided, including a communication interface and a logic circuit. The communication interface is configured to send a second request message and/or receive a second response message. The logic circuit is configured to monitor a paging message based on the second response message to perform the method according to any one of the possible implementations of the third aspect.

According to a thirteenth aspect, still another communication apparatus is provided, including a communication interface and a logic circuit. The communication interface is configured to receive a second request message and/or send a second response message. The logic circuit is configured to transmit a monitoring occasion of a paging message based on the second request message, to perform the method according to any possible implementation of the fourth aspect.

**BRIEF DESCRIPTION OF DRAWINGS**

FIG. 1 is a schematic diagram of a system frame;
FIG. 2 is a schematic diagram of power loss of UE in different states;
FIG. 3 is a schematic diagram of a system architecture for PSM transmission according to an embodiment of this application;
FIG. 4 is a schematic diagram of another system architecture for PSM transmission according to an embodiment of this application;
FIG. 5 is a schematic flowchart of a method for PSM transmission according to an embodiment of this application;
FIG. 6 is a schematic diagram of power loss in different states according to an embodiment of this application;
FIG. 7 is a schematic diagram of a system frame according to an embodiment of this application;
FIG. 8 is a schematic block diagram of an apparatus for PSM transmission according to an embodiment of this application;
FIG. 9 is a schematic block diagram of another apparatus for PSM transmission according to an embodiment of this application; and
FIG. 10 is a schematic block diagram of still another apparatus for PSM transmission according to an embodiment of this application.

**DESCRIPTION OF EMBODIMENTS**

The following describes technical solutions of this application with reference to the accompanying drawings.

For ease of understanding, terms used in embodiments of this application are first briefly described.

1. Non-terrestrial network (non-terrestrial network, NTN): The rapid development of information technologies poses more urgent requirements for high efficiency, mobility, and diversity of communication. A conventional terrestrial network cannot provide seamless coverage for user equipment (user equipment, UE), especially in places in which a base station cannot be deployed, such as seas, deserts, or the air. Therefore, the NTN is introduced into a 5th generation mobile network (5th generation mobile network, 5G). In the NTN, the base station or some base station functions are deployed on a high-altitude platform or a satellite, to provide seamless coverage for UE. In addition, the high-altitude platform or the satellite is less subject to natural disasters, and reliability of a 5G system can be improved.

2. Satellite communication: In some important fields, such as space communication, aviation communication, maritime communication, and military communication, satellites play an irreplaceable role. The satellite communication has characteristics of a long communication distance, a large coverage area, and flexible networking. The satellite communication can provide services for both fixed terminals and various mobile terminals.

3. Radio resource control (radio resource control, RRC) state: There are three RRC states: an idle state (RRC_IDLE), an inactive state (RRC_INACTIVE), and a connected state (RRC_CONNECTED).

When UE is in the connected state (RRC_CONNECTED), the UE can receive/send data from/to a network, monitor control signaling that indicates control authorization on a shared channel, and report channel quality to the network.

When the UE is in the idle state (RRC_IDLE) or the inactive state (RRC _INACTIVE), the UE generally turns off a receiver and is in a low power consumption state. To receive a paging message (paging message) sent by a base station, the UE periodically wakes up from the low power consumption mode and attempts to receive the paging message. The paging message mainly includes a system information change notification or a natural disaster short message warning.

4. Discontinuous reception (discontinuous reception, DRX): In a cellular system, the 3rd generation partnership project (3rd generation partnership project, 3GPP) designs a DRX mechanism to reduce power consumption of UE. According to the DRX mechanism, when the UE is in an idle state (RRC _IDLE) or an inactive state (RRC_INACTIVE), the UE may periodically receive a paging message based on DRX information configured by a network.

A specific time point at which the UE receives the paging message is based on a paging frame (paging frame, PF) and a paging occasion (paging occasion, PO). The PF indicates a frame in which a paging message is sent. That is, the UE in the idle state (RRC _IDLE) or the inactive (RRC_INACTIVE) attempts to receive the paging message only in the PF. The PO indicates an occasion for attempting to receive the paging message in the PF. Because the paging message is scheduled by using downlink control information (downlink control information, DCI) that is scrambled by a paging-radio network temporary identifier (paging-radio network temporary identifier, P-RNTI), a PO may actually correspond to a detection occasion of DCI scrambled by S P-RNTIs, where S may be obtained from a system message.

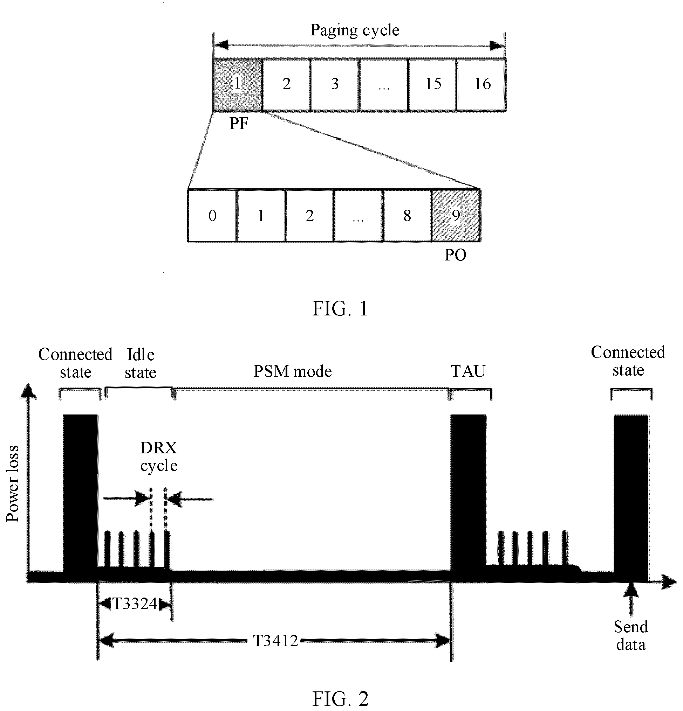

FIG. 1 is a schematic diagram of a system frame. As shown in FIG. 1, a paging cycle (paging cycle) includes 16 system frames, a system frame whose system frame number (system frame number, SFN) is 1 is a paging frame PF, the paging frame PF includes 10 sub-frames whose identifiers range from 0 to 9, and a paging occasion PO may be located in a sub-frame whose identifier is 9. UE can receive a paging message in a PF. Each PF corresponds to a plurality of POs. However, a network does not send the paging messages to the UE on all POs.

The following uses narrowband internet of things (narrowband internet of things, NB-IoT) as an example to describe a manner of obtaining a PF and a PO.

For example, the PF is located in a system frame that satisfies the following formula:

$$\text{SFN mod } T = (T \text{ div } N) * (UE\_ID \text{ mod } N).$$

mod represents a modulo operation, div represents an exact division operation, SFN represents a system frame number, and T represents a DRX cycle and is a measurement of time, which may be, for example, 2.56 seconds. It may be understood that the UE may have one or more occasions to attempt to receive a paging message in time T. N represents a quantity of PFs included in each DRX cycle. UE_ID is an identifier of the UE, where UE_ID is based on an international mobile subscriber identity (international mobile subscriber identity, IMSI). For example, the UE_ID may be obtained through by IMSI mod 4096.

For example, a location of the PO may be determined based on the following formula:

$$i\_s = \text{floor } (UE\_ID/N) \text{ mod } (Ns).$$

floor (·) represents a rounding down operation, and Ns represents a quantity of POs included in each PF. Based on an i_s index obtained through calculation, the location of the PO may be obtained by querying Table 1.

**Table 1**

| Ns | i_s = 0 | i_s = 1 | i_s = 2 | i_s = 3 |
|----|---------|---------|---------|---------|
| 1  | 9       | N/A     | N/A     | N/A     |
| 2  | 4       | 9       | N/A     | N/A     |
| 4  | 0       | 4       | 5       | 9       |

In Table 1, a value of Ns may be 1, 2, or 4, a value of i_s may be 0, 1, 2, or 3, and N/A indicates a location in which no PO exists. Different values of Ns and i_s correspond to different PO locations. For example, it can be learned from Table 1 that, when Ns = 1 and i_s = 0, the PO may be located in a sub-frame whose identifier is 9 shown in FIG. 1.

5. PSM mode: The PSM is a new low power consumption mode introduced in NB-IoT scenarios. It is a non-access stratum (non-access stratum, NAS) function and may be initiated by UE. In the PSM mode, the UE may enter a long-term deep sleep mode without periodically monitoring a paging message. After the PSM is activated, the network cannot communicate with the UE.

FIG. 2 is a schematic diagram of power loss of UE in different states. In FIG. 2, a horizontal coordinate represents time, and a state of the UE changes with time. A vertical coordinate represents power loss, which varies with different states of UE. It can be learned from FIG. 2 that the UE is in a connected state (RRC_CONNECTED) at the beginning, and the UE in the connected state may process uplink and downlink service data. After the UE processes the service data, an RRC connection is released, and the UE enters an idle state (RRC_IDLE). The idle state corresponds to a plurality of DRX cycles, and the UE may monitor a paging message in each DRX cycle, that is, the UE in the idle state may periodically monitor the paging message.

The idle state corresponds to a timer. For example, the timer may be a T3324 timer (whose duration is 0 to 255 seconds). Upon expiration of the T3324 timer, the UE may transit from the idle state to the PSM mode. Therefore, the T3324 timer may also be referred to as an activation timer of the PSM mode, or the duration of the T3324 timer may be referred to as delay time for which the UE transits from the idle state to the PSM mode.

In a possible implementation, the UE may exit the PSM mode after a timer corresponding to the PSM mode expires. For example, the timer corresponding to the PSM mode may be a T3412 timer, and duration of the T3412 timer may be 6 minutes, 12 minutes, or another duration. This is not limited in embodiments of this application. The T3412 timer may also be referred to as a tracking area update (tracking area update, TAU) cycle request timer. Upon expiration of the T3412 timer, the UE exits the PSM mode and enters the connected state to perform TAU. If there is no service data to be processed after the TAU, the UE enters the idle state again from the connected state, and then enters the PSM mode. This process is repeated in this way.

In another possible implementation, the UE may actively exit the PSM mode when there is service data to be processed, to enter the connected state to process the service data.

When the UE exits the PSM mode based on either of the foregoing two possible implementations, considering that a satellite platform moves at a high speed in an NTN scenario, it is likely that a serving satellite base station of a cell in which the UE is located moves to another cell in a future period of time, but another satellite base station in a satellite topology has not moved to the cell in which the UE is located. As a result, the cell in which the UE is located is not covered by a satellite base station. In this case, the UE exits the PSM mode. After entering the connected state, the UE cannot communicate with the satellite base station. In other words, the UE exits the PSM mode at an inappropriate time point. This causes a waste of power consumption.

In view of this, embodiments of this application provide a method for PSM transmission in an NTN scenario. When transmitting a PSM, the satellite base station may allocate a wakeup occasion window in the PSM mode to UE. When there is service data to be processed, the UE may temporarily wake up in the wakeup occasion window, and process the service data in the wakeup occasion window. Because there is a satellite base station that communicates with the UE in the wakeup occasion window, the UE may wake up in an appropriate time period, which helps reduce a waste of power consumption.

It should be understood that embodiments of this application may be applied to a plurality of different scenarios, for example, data transmission between a terminal device and a network device, data transmission between terminal devices, and data transmission between network devices. This is not limited in embodiments of this application. The following describes embodiments of this application based on a first communication apparatus and a second communication apparatus.

Before a method and an apparatus for power saving mode PSM transmission provided in embodiments of this application are described, the following descriptions are first provided.

First, in the following embodiments, terms and English abbreviations, such as a PSM mode, a wakeup occasion window, an attach accept message, and tracking area update, are all examples provided for ease of description, and shall not constitute any limitation on this application. This application does not exclude a possibility of defining another term that can implement a same or similar function in an existing or a future protocol.

Second, the terms "first", "second", and various numbers in the following embodiments are merely used for differentiation for ease of description, and are not intended to limit the scope of embodiments of this application. For example, different communication apparatuses are distinguished.

Third, "at least one" means one or more, and "a plurality of" means two or more. "And/or" is an association relationship for describing associated objects, and indicates that three relationships may exist. For example, A and/or B may indicate the following cases: Only A exists, both A and B exist, and only B exists, where A and B may be in a singular form or a plural form. A character "/" generally presents an "or" relationship between the associated objects.

"At least one of the following items (pieces)" or a similar expression thereof refers to any combination of these items, including any combination of singular items (pieces) or plural items (pieces). For example, at least one of a, b, and c may represent a, or b, or c, or a and b, or a and c, or b and c, or a, b, and c, where a, b, and c may be single, or may be plural.

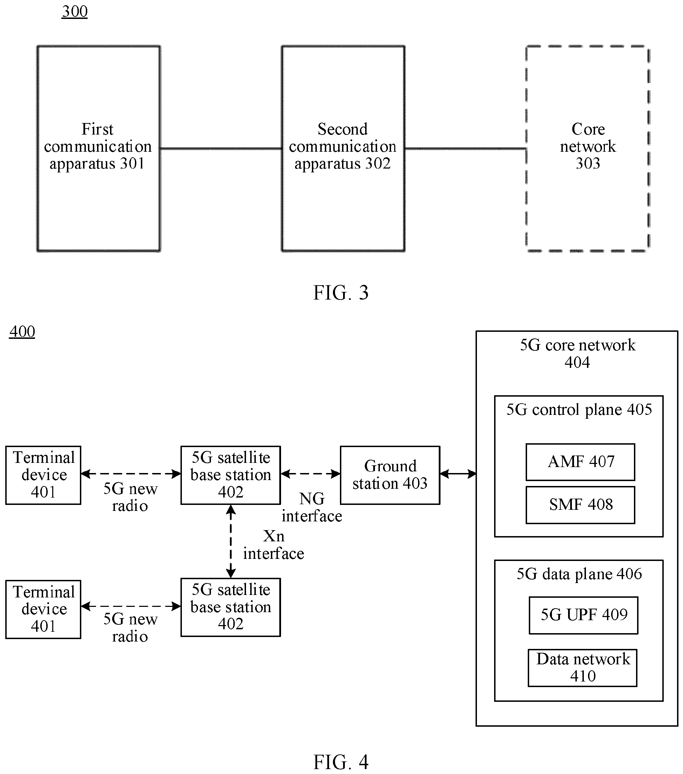

FIG. 3 is a schematic diagram of a system architecture 300 for PSM transmission according to an embodiment of this application. The system architecture 300 includes a first communication apparatus 301, a second communication apparatus 302, and a core network 303.

The second communication apparatus 302 may be deployed on a satellite to communicate with the first communication apparatus 301, and the second communication apparatus 302 is connected to the terrestrial core network 303 over a radio link.

It should be understood that the first communication apparatus may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the first communication apparatus may be a cellular phone, a cordless phone, a session initiation protocol (session initiation protocol, SIP) phone, a wireless local loop (wireless local loop, WLL) station, a personal digital assistant (personal digital assistant, PDA), a handheld device with wireless communication functions, a computing device, another processing device connected to a wireless modem, a vehicle-mounted device, a wearable device, a communication apparatus in a 5G network, a communication apparatus in a future evolved public land mobile communication network (public land mobile network, PLMN), or the like. This is not limited in embodiments of this application.

By way of example but not limitation, in embodiments of this application, the first communication apparatus may alternatively be a wearable device. The wearable device may also be referred to as a wearable intelligent device, and is a generic term for wearable device such as glasses, gloves, watches, clothes, and shoes that are developed by applying wearable technologies to intelligent designs of daily wear. The wearable device is a portable device that is directly worn on a body or integrated into a user's clothes or accessories. The wearable device is a hardware device, and implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

In addition, in embodiments of this application, the first communication apparatus may also be a terminal device in an IoT system. IoT is an important part of future information technology development. A main technical feature of IoT is that an object is connected to a network by using a communication technology, to implement an intelligent network of man-machine interconnection and object-thing interconnection. In embodiments of this application, the IoT technology may implement massive connections, deep coverage, and terminal power saving by using, for example, a narrowband NB-IoT technology.

In addition, in embodiments of this application, the first communication apparatus may also be a terminal device that uses a device-to-device (device-to-device, D2D) communication technology. The D2D technology is a communication manner in which two peer terminal devices directly communicate with each other. In a distributed network including D2D terminal devices, each terminal device node can send and receive a signal, and has a function of automatic routing (forwarding a message).

The second communication apparatus may be a base station (base transceiver station, BTS) in a global system for mobile communications (global system for mobile communications, GSM) or code division multiple access (code division multiple access, CDMA) system, or may be a base station (NodeB, NB) in a wideband code division multiple access (wideband code division multiple access, WCDMA) system, or may be an IoT base station in an IoT system or an NB-IoT base station in a narrowband internet of things (narrowband internet of things, NB-IoT) system, or may be an evolved NodeB (evolved NodeB, eNB, or eNodeB) in an LTE system, or may be a radio controller in a cloud radio access network (cloud radio access network, CRAN) scenario. Alternatively, the second communication apparatus may be a relay station, an access point, a vehicle-mounted device, a wearable device, a communication apparatus in a 5G network, a communication apparatus in a future evolved PLMN network, or the like. This is not limited in embodiments of this application.

The second communication apparatus in embodiments of this application may be a device in a radio network, for example, a radio access network (radio access network, RAN) node that connects a terminal to a wireless network. Currently, some example RAN nodes include a base station, a next-generation base station gNB, a transmission reception point (transmission reception point, TRP), an evolved NodeB (evolved NodeB, eNB), a home base station, a baseband unit (baseband unit, BBU), or an access point (access point, AP) in a Wi-Fi system. In a network structure, the second communication apparatus may include a central unit (central unit, CU) node, a distributed unit (distributed unit, DU) node, or a RAN device including a CU node and a DU node.

FIG. 4 is a schematic diagram of another system architecture 400 for PSM transmission according to an embodiment of this application. It should be understood that the system architecture 400 is a more specific description of the system architecture 300. The following describes the system architecture 400 by using an example in which the first communication apparatus 301 is a terminal device, the second communication apparatus 302 is a 5G satellite base station, and the core network 303 is a 5G core network. It can be learned from FIG. 4 that the system architecture 400 includes two terminal devices 401, two 5G satellite base stations 402, a ground station 403, and a 5G core network 404. The 5G core network 404 includes a 5G control plane 405 and a 5G data plane 406.

The terminal device 401 may be a device such as a mobile phone or a pad that supports 5G new radio. The terminal device 401 may access a satellite network through an air interface and initiate services such as a call and an Internet access service.

The 5G satellite base station 402 mainly provides a wireless access service, may schedule a radio resource for an accessed terminal device, and provides a reliable wireless transmission protocol and a reliable data encryption protocol.

The ground station 403 is mainly responsible for forwarding signaling and service data between the 5G satellite base station 402 and the 5G core network 404.

The 5G core network 404 is mainly responsible for user access control, mobility management, session management, user security authentication, and charging, and other services. The 5G core network 404 includes a plurality of functional units, and may be divided into two functional entities: the 5G control plane 405 and the 5G data plane 406.

The 5G control plane 405 includes a 5G access and mobility management function (access and mobility management function, AMF) 407 and a 5G session management function (session management function, SMF) 408. The 5G AMF 407 is responsible for user access management, security authentication, and mobility management. The 5G SMF 408 is responsible for interacting with a separated 5G data plane 406, protocol data unit (protocol data unit, PDU) session creation, update, and deletion, and PDU session environment management.

The 5G data plane 406 includes a 5G user plane network function (user plane function, UPF) network element 409 and a data network 410. The 5G UPF 409 is responsible for interacting with the data network 410, and managing user plane data transmission, traffic statistics collection, security monitoring, and the like.

The data network 410 may provide massive and diverse data for the 5G UPD 409.

In the system architecture 400, the 5G new radio represents a radio link between the terminal device 401 and the 5G satellite base station 402. An Xn interface represents an interface between the two 5G satellite base stations 402, and is mainly configured for signaling interaction such as handover. An NG interface is an interface between the 5G satellite base station 402 and the 5G core network 404, and is mainly configured to exchange NAS signaling of the 5G core network 404 and service data of a user.

The 5G satellite base station 402 may transmit downlink data to the terminal device 401. The data is encoded through channel coding, and the data obtained through channel coding is transmitted to the terminal device 401 after constellation modulation. The terminal device 401 transmits uplink data to the 5G satellite base station 402. The uplink data may also be encoded through channel coding, and the encoded data is transmitted to the 5G satellite base station 402 after constellation modulation.

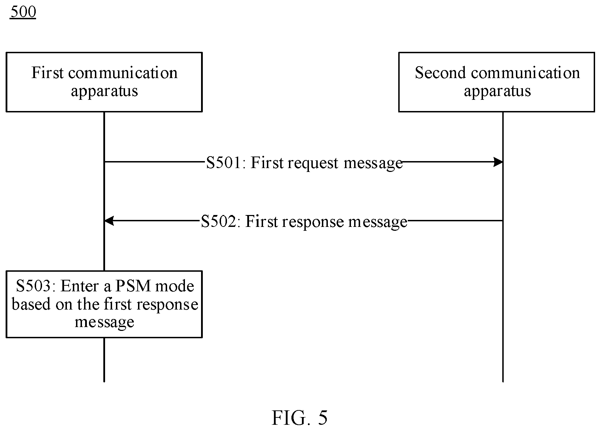

FIG. 5 is a schematic flowchart of a method 500 for PSM transmission according to an embodiment of this application. The method 500 includes the following steps.

S501: A first communication apparatus sends a first request message, where the first request message is for requesting to enter a PSM mode. Accordingly, a second communication apparatus receives the first request message.

S502: The second communication apparatus sends a first response message. Accordingly, the first communication apparatus receives the first response message.

The first response message includes first indication information and second indication information, the first indication information indicates the first communication apparatus to enter the PSM mode, the second indication information indicates X wakeup occasion windows for the first communication apparatus in the PSM mode, and X is greater than or equal to 0.

S503: The first communication apparatus enters the PSM mode based on the first response message.

In this embodiment of this application, the first communication apparatus may send a request to the second communication apparatus to enter the PSM mode. If the second communication apparatus allows the first communication apparatus to enter the PSM mode, the second communication apparatus may indicate, via the first indication information, the first communication apparatus to enter the PSM mode; and indicate, via the second indication information, the X wakeup occasion windows (wakeup occasion windows) in which the first communication apparatus can perform data transmission in the PSM mode, where X is greater than or equal to 0.

It should be understood that, the X wakeup occasion windows may be determined based on prediction of a constellation topology, and a time point at which a satellite base station covers the first communication apparatus may be predicted based on the constellation topology. In this way, after receiving the X wakeup occasion windows, the first communication base station may determine, based on the X wakeup occasion windows, whether to wake up from the PSM mode. In other words, the first communication apparatus may wake up from the PSM mode at an appropriate time point, which helps reduce a waste of power consumption.

In an optional embodiment, when X is greater than 0, the second indication information includes a start time point and an end time point of each of the X wakeup occasion windows, or a start time point and duration of each wakeup occasion window.

It should be understood that when X is greater than 0, it means that there is at least one wakeup occasion window in which the first communication apparatus wakes up in the PSM mode. When X is equal to 0, it means that based on the prediction of the constellation topology, there is no wakeup occasion window for the first communication within duration of the PSM mode, and the first communication apparatus continues to maintain in the PSM mode to reduce power consumption.

In this embodiment of this application, the second indication information may include different forms of the wakeup occasion window. For example, the second communication apparatus may indicate, via the second indication information, the start time point and the end time point of each wakeup occasion window, or indicate the start time point and the duration of each wakeup occasion window.

For example, the second communication apparatus may carry information about the wakeup occasion window in a tabular form, where the format of the information about the wakeup occasion window is shown in Table 2 or Table 3.

**Table 2**

| 8 | 7 | 6 | 5 | 4 | 3 | 2 | 1 |
|---|---|---|---|---|---|---|---|
| Wakeup occasion IEI | | | | | | | |
| Byte length of a wakeup occasion window | | | | | | | |
| Duration of the wakeup occasion window | | | | Start time point of the wakeup occasion window | | | |

**Table 3**

| 8 | 7 | 6 | 5 | 4 | 3 | 2 | 1 |
|---|---|---|---|---|---|---|---|
| Wakeup occasion IEI | | | | | | | |
| Byte length of a wakeup occasion window | | | | | | | |
| Start time point of the wakeup occasion window | | | | End time point of the wakeup occasion window | | | |

The wakeup occasion information element identifier (information element identifier, IEI) indicates a specific meaning indicated by the field. Table 2 and Table 3 each show a possible bearer form of one of the X wakeup occasion windows. In addition, the X wakeup occasion windows may be alternatively shown in a same table, or the X wakeup occasion windows are shown in separate tables. This is not limited in embodiments of this application.

In an optional embodiment, after S503, the method 500 further includes: If the first communication apparatus has to-be-sent service data, the first communication apparatus sends the service data in a first wakeup occasion window of the X wakeup occasion windows.

In this embodiment of this application, if the first communication apparatus has service data to be processed, the first communication apparatus may select the first wakeup occasion window from the X wakeup occasion windows for data transmission. After the first wakeup occasion window elapses, the first communication apparatus may enter the PSM mode again.

It should be understood that the first wakeup occasion window may be any one of the X wakeup occasion windows in the PSM mode. This is not limited in embodiments of this application. Certainly, in actual application, the first wakeup occasion window is certainly after a service data transmission requirement or a TAU update requirement (or another requirement that wakeup is required) is generated. Therefore, strictly speaking, the first wakeup occasion window may be any one of last X0 wakeup occasion windows of the X wakeup occasion windows in the PSM mode, and the X0 wakeup occasion windows are after the service data transmission requirement or the TAU update requirement (or the another requirement that wakeup is required) is generated. Without affecting understanding, X is still used as an example for description in this application.

In an optional embodiment, the first response message is an attach accept message or a tracking area update accept message.

In this embodiment of this application, the first communication apparatus may send an attach request message in an attach (attach) procedure or a tracking area update request message in a tracking area update TAU procedure to the second communication apparatus to enter the PSM mode. Accordingly, the second communication apparatus may send the attach accept message or the tracking area update accept message to the first communication apparatus, to indicate the first communication apparatus to enter the PSM mode, and indicate the wakeup occasion window of the first communication apparatus in the PSM mode.

In an optional embodiment, the method 500 further includes: The first communication apparatus receives information about first duration, where the first duration indicates delay time of the PSM mode. S503 includes: After receiving the first response message, the first communication apparatus enters the PSM mode after the first duration elapses.

In this embodiment of this application, the first duration indicates the delay time of the PSM mode, that is, duration from a time point at which the first communication apparatus enters an idle state to a time point at which the first communication apparatus enters the PSM mode.

For example, the first duration may be duration of a T3324 timer, where the T3324 timer may be referred to as an activation timer of the PSM mode. Upon expiration of the T3324 timer, the first communication apparatus may enter the PSM mode.

In an optional embodiment, the method 500 further includes: The first communication apparatus receives information about second duration, where the second duration indicates duration of the PSM mode, and after entering the PSM mode, the first communication apparatus exits the PSM mode after the second duration elapses.

In this embodiment of this application, the second duration indicates the duration of the PSM mode, that is, duration from the time point at which the first communication apparatus enters the idle state to a time point at which the first communication apparatus exits the PSM mode.

For example, the second duration may be duration of a T3412 timer. Upon expiration of the T3412 timer, the first communication apparatus may exit the PSM mode.

It should be understood that, if the wakeup occasion window exists in the PSM mode, but there is no service data to be processed, and the second duration has not elapsed yet, the first communication apparatus still does not exit the PSM mode. The first communication apparatus does not exit the PSM mode until the second duration elapses.

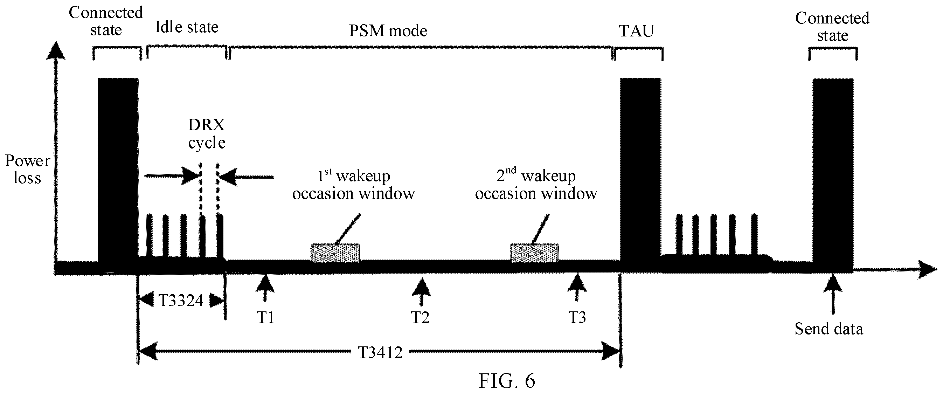

FIG. 6 is a schematic diagram of power loss in different states according to an embodiment of this application. Compared with FIG. 1, FIG. 6 shows X wakeup occasion windows within duration of a PSM mode, where X is greater than or equal to 0.

After processing data, a first communication apparatus may enter an idle state. The idle state corresponds to a T3324 timer. Upon the expiration of the T3324 timer, the first communication apparatus may enter the PSM mode. When the X wakeup occasion windows shown in the figure exist in the PSM mode, the first communication apparatus may select a wakeup occasion window from the X wakeup occasion windows for data transmission.

For example, when X = 0, that is, a second communication apparatus indicates that the first communication apparatus does not have a wakeup occasion window in the PSM mode, the first communication apparatus does not need to wake up even if there is service data to be processed, maintains in the PSM mode until the T3412 expires, and then exits the PSM mode.

For example, if there are two wakeup occasion windows in the PSM mode shown in the figure, that is, X = 2, and the first communication apparatus has a to-be-processed data service at a time point T1, but a $1^{st}$ wakeup occasion window in the PSM mode has not arrived yet, the first communication apparatus needs to wait for the $1^{st}$ wakeup occasion window to arrive. When the $1^{st}$ wakeup occasion window arrives, the first communication apparatus may process service data in the $1^{st}$ wakeup occasion window.

In addition, the first communication apparatus may not process the service data in the $1^{st}$ wakeup occasion window, but wait for arrival of a $2^{nd}$ wakeup occasion window, and process the service data in the $2^{nd}$ wakeup occasion window. This is not limited in embodiments of this application.

For example, if there are two wakeup occasion windows in the PSM mode shown in the figure, that is, X = 2, and the first communication apparatus needs to process a data service at a time point T2, because the $1^{st}$ wakeup occasion window has elapsed, and the $2^{nd}$ wakeup occasion window has not arrived yet, the first communication apparatus needs to wait for the $2^{nd}$ wakeup occasion window to arrive. When the $2^{nd}$ wakeup occasion window arrives, the first communication apparatus may process service data in the $2^{nd}$ wakeup occasion window.

For example, if there are two wakeup occasion windows shown in the PSM mode in the figure, that is, X = 2, and the first communication apparatus has a to-be-processed data service at a time point T3, but the $1^{st}$ wakeup occasion window and the $2^{nd}$ wakeup occasion window have elapsed, and there is no wakeup occasion window for the first communication apparatus for data transmission after the T3412 timer expires, the first communication apparatus needs to exit the PSM mode and enter a connected state to perform tracking area update. Then, a next PSM mode cycle begins after the first communication apparatus enters the idle state, and the first communication apparatus selects a latest wakeup occasion window in the next PSM mode cycle to process service data.

When X is another value, a processing process is similar to the case that X = 2. Details are not described in embodiments of this application herein again.

With reference to FIG. 1 to FIG. 6, the foregoing describes in detail the method for PSM transmission provided in embodiments of this application. The first communication apparatus may determine, based on the X wakeup occasion windows sent by the second communication apparatus, a wakeup occasion window for the first communication apparatus in the PSM mode. This helps reduce power loss of the first communication apparatus.

When the first communication apparatus is in the idle state, the first communication apparatus needs to periodically monitor a paging message based on a DRX configuration. Because a paging message configuration is sent in a system message and the system message is bound to a cell, in a scenario that a cell in which the first communication apparatus is located is bound to a geographical location, the first communication apparatus may monitor the paging message based on an originally configured paging cycle when there is no serving satellite base station. However, the paging message may not be obtained through monitoring in each paging cycle. This also causes a waste of power consumption.

For example, an indication for an active cycle (Active_cycle) in a paging cycle may be added to a SystemInformationBlockType2-NB->RadioResourceConfigCommonSIB-NB->PCCH-Config-NB field of an RRC message:

```
RadioResourceConfigCommonSIB-NB-r13 ::=    SEQUENCE {
    rach-ConfigCommon-r13                    RACH-ConfigCommon-NB-r13,
    bcch-Config-r13                          BCCH-Config-NB-r13,
    pcch-Config-r13                          PCCH-Config-NB-r13,
    nprach-Config-r13                        NPRACH-ConfigSIB-NB-r13,
    ……
}
PCCH-Config-NB-r13 ::=                       SEQUENCE {
    defaultPagingCycle-r13                   ENUMERATED  {rf128,  rf256,  rf512,
rf1024}, nB-r13                              ENUMERATED {
                                             fourT, twoT, oneT, halfT, quarterT, one8thT,
                                             one16thT, one32ndT, one64thT,
                                             one128thT, one256thT, one512thT, one1024thT,
                                             spare3, spare2, spare1},
    npdcch-NumRepetitionPaging-r13           ENUMERATED {
                                             r1, r2, r4, r8, r16, r32, r64, r128,
                                             r256, r512, r1024, r2048,

                                             spare4, spare3, spare2, spare1}
    Active_cycle                             Bit                          STRING
(size(2……maxPeriod_of_cycles))
}
```

SEQUENCE{...} indicates that all parameters enumerated in the following may be included, ENUMERATED { ...} indicates that one of the parameters enumerated in the following is selected, and Bit STRING(size(...)) indicates that a size of a bit string may be one of parameter ranges enumerated in the following.

For example, a radio frame (radio frame, rf) 128 indicates that there are 128 radio frames, and rf 256, rf 512, and rf 1024 are similar to rf 128. Details are not described herein again.

For example, fourT represents four paging cycles, halfT represents half a paging cycle, and one 16thT represents 1/16 paging cycles. Meanings of others, for example, quarterT, are similar to that of one 16thT. Details are not described herein again.

For example, r1 indicates repetition once, r2 indicates repetition twice, and meanings of other values such as r32 are similar to those of r1 and r2. Details are not described herein again.

The foregoing "Active_cycle Bit STRING (size (2......maxPeriod_of_cycles))" is a newly added field, and the indication for the active cycle (Active_cycle) in a paging cycle may be added to the field. For example, an active cycle (active cycle) = 010000 may be used in the field to indicate to monitor a paging message in a second paging cycle.

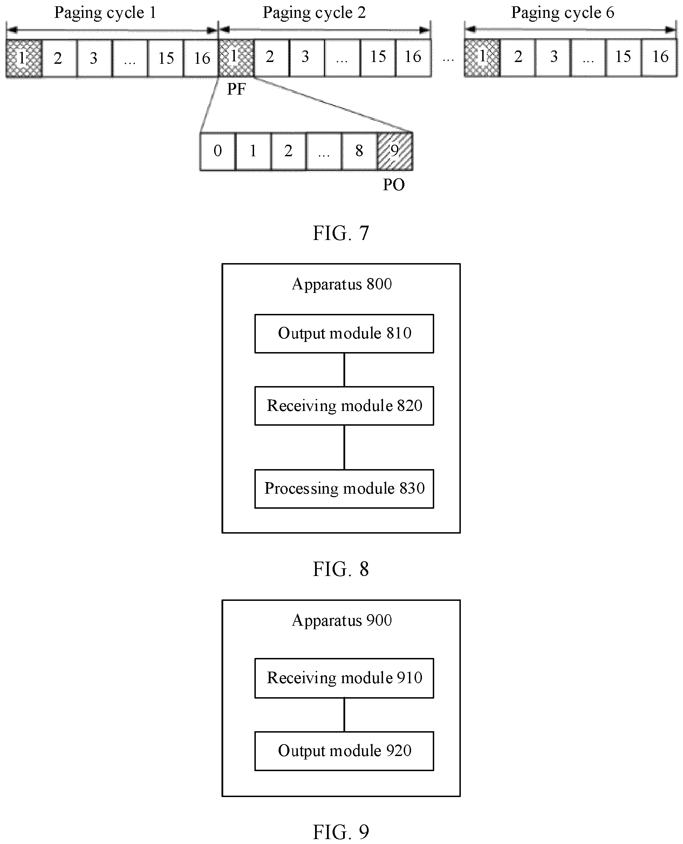

FIG. 7 is a schematic diagram of a system frame according to an embodiment of this application. FIG. 7 includes six paging cycles, and each paging cycle includes 16 system frames. When an active cycle (active cycle) = 010000 is used to indicate to monitor a paging message in a second paging cycle. For example, as shown in FIG. 7, a system frame whose system frame number is 17 in the second paging cycle is a paging frame PF, the paging frame PF includes 10 sub-frames whose identifiers range from 0 to 9, and a paging occasion PO may be located in a sub-frame whose identifier is 9.

Similarly, an active cycle (active cycle) = 001000 may be used to indicate to monitor a paging message in a third paging cycle.

In other words, a bit of the active cycle (active cycle) being 1 from left to right indicates that the first communication apparatus may monitor the paging message in a corresponding paging cycle.

For example, the active cycle (active cycle) = 000010 may be further used to indicate to monitor the paging message in the second paging cycle. That is, the active cycle indicates a bit being 1 from right to left, indicating that the first communication apparatus may monitor the paging message in the corresponding paging cycle. It should be understood that there may be another paging cycle active indication. This is not limited in embodiments of this application.

In this way, the active cycle indication of the paging cycle is added to a field of an RRC message sent to the first communication apparatus, and the first communication apparatus may select, based on the active cycle indication, a cycle for monitoring the paging message, to help reduce a waste of power consumption.

With reference to FIG. 7, that the first communication apparatus may select, based on the active cycle indication, an appropriate paging cycle for monitoring the paging message is described in the foregoing. In addition, the first communication apparatus may further stop monitoring for a period of time based on an indication of a deactive window (Deactive_window).

For example, an indication for the deactive window in the paging cycle may be added to a SystemInformationBlockType2-NB->RadioResourceConfigCommonSIB-NB->PCCH-Config-NB field of the RRC message:

```
RadioResourceConfigCommonSIB-NB-r13 ::=     SEQUENCE {
ach-ConfigCommon-r13                        RACH-ConfigCommon-NB-r13,
bcch-Config-r13                             BCCH-Config-NB-r13,
pcch-Config-r13                             PCCH-Config-NB-r13,
nprach-Config-r13                           NPRACH-ConfigSIB-NB-r13,

......

}
PCCH-Config-NB-r13 ::=                       SEQUENCE {
defaultPagingCycle-r13                       ENUMERATED  {rf128,  rf256,  rf512,
rf1024},nB-r13                               ENUMERATED {
                                             fourT, twoT, oneT, halfT, quarterT, one8thT,
                                       one16thT, one32ndT, one64thT,
                                    one128thT, one256thT, one512thT, one1024thT,
                                       spare3, spare2, spare1},
npdcch-NumRepetitionPaging-r13               ENUMERATED {
                                             r1, r2, r4, r8, r16, r32, r64, r128,
                                       r256, r512, r1024, r2048,
                                    spare4, spare3, spare2, spare1}
Deactive_window                              SEQUENCE {
Window_Start                                 ENUMERATED{rf1,......,rf1024},
Duration                                     INTEGER(1...maxNumber_of_rf)
}
}
```

Meanings of SEQUENCE{...}, ENUMERATED{...}, and respective enumerated parameters are described above, and details are not described herein again. INTEGER represents an integer type, which can be one of the enumerated parameter ranges.

The "Deactive_window SEQUENCE{...}" field is a newly added field, and an indication for a deactive window (Deactive_window) may be added to the field. After stopping monitoring for a period of time based on the indication for the deactive window (Deactive_window) field, the first communication apparatus may continue to monitor the paging message based on an original configuration.

Similar to a DRX configuration, when the first communication apparatus is in an idle state, the first communication apparatus may further periodically monitor the paging message based on an extended discontinuous reception (extended DRX, eDRX) configuration. Similarly, a time period in which monitoring is stopped may be indicated based on indication information.

For example, the paging message sent by a network to the second communication apparatus may include a field: IE: NB-IoT paging eDRX Information. The information includes parameter information used for NB-IoT paging eDRX, that is, NB-IoT paging eDRX cycle. In addition, a deactive window start (Deactive_Window_Start) field and a deactive duration (Deactive_duration) field are added, to indicate a time period in which the first communication apparatus stops monitoring, and also a time period in which the second communication apparatus stops sending the paging message. As shown in Table 4, a start time point at which monitoring is stopped may be indicated in a "Deactive _Window_Start" field, and duration of notification monitoring may be indicated in a "Deactive_duration" field.

In Table 4, "M" indicates that a corresponding field is mandatory, and "O" indicates that a corresponding field is optional.

For example, hf2 represents two superframes, hf3 represents three superframes, and meanings of others, for example, hf16, are similar to that of hf2. Details are not described herein again.

For example, s1 represents one sub-frame, and s2 represents two sub-frames. Other meanings represented by, for example, s6, are similar to that represented by s1. Details are not described herein again.

The period $T_{eDRX}$ corresponding to the "NB-IoT paging eDRX cycle" field is defined in TS 36.304 [20]. The period is measured in a number of superframes (number of hyperframes).

For example, the first communication apparatus may request an eDRX configuration in an attach request message or a tracking area update request message. Correspondingly, the network may carry the eDRX configuration to an attach accept message or a tracking area update accept message, and send the eDRX configuration to the first communication apparatus. A deactive_window start (Deactive_Window_Start) field and a deactive duration (Deactive_duration) field are added to the eDRX configuration, to indicate a time period in which monitoring is stopped. As shown in Table 5, a start time point at which monitoring is stopped may be indicated in the "deactive window start" field, and duration in which monitoring is stopped may be indicated in the "deactive duration" field.

It should be understood that the network sends the time period in which monitoring is stopped to the second communication apparatus, and the second communication apparatus also needs to send the time period in which monitoring is stopped to the first communication apparatus. In this way, the second communication apparatus stops sending a paging message in the time period in which monitoring is stopped, and the first communication apparatus stops monitoring a paging message in the time period in which monitoring is stopped. This facilitates information synchronization between the first communication apparatus and the second communication apparatus.

**Table 4**

| IE/Group name | Presence | Range | IE type and reference | Semantics description |
|---|---|---|---|---|
| NB-IoT paging eDRX cycle | M | | ENUMERATED (hf2, hf4, hf6, hf8, hf10, hf12, hf14, hf16, hf32, hf64, hf128, hf256, hf512, hf1024, ...) | $T_{eDRX}$ defined in TS 36.304 [20]. Unit: [number of hyperframes]. |
| NB-IoT paging time window | O | | ENUMERATED (s1, s2, s3, s4, s5, s6, s7, s8, s9, s10, s11, s12, s13, s14, s15, s16, ...) | Unit: [2.56 seconds] |
| Deactive_Window_Start | M | | | |
| Deactive_duration | M | | | |

**Table 5**

| 8 | | 7 | 6 | 5 | 4 | 3 | 2 | 1 |
|---|---|---|---|---|---|---|---|---|
| eDRX parameter IEI | | | | | | | | |
| Byte length of an eDRX parameter | | | | | | | | |
| Monitoring time window | | eDRX value | | | | | | |
| Deactive window start | | Deactive duration | | | | | | |

It should be understood that the sequence number of the foregoing procedure does not mean the sequence of execution. The execution sequence of each procedure should depend on functions and inner logic, but does not constitute any limitation on the implementation procedure of embodiments of this application.

The foregoing describes in detail the method for PSM transmission according to embodiments of this application with reference to FIG. 3 to FIG. 7. The following describes in detail an apparatus for PSM transmission according to embodiments of this application with reference to FIG. 8 to FIG. 10.

FIG. 8 is a schematic block diagram of an apparatus 800 for PSM transmission according to an embodiment of this application. The apparatus 800 includes an output module 810, a receiving module 820, and a processing module 830.

The output module 810 is configured to output a first request message, where the first request message is for requesting to enter a PSM mode. The receiving module 820 is configured to receive a first response message, where the first response message includes first indication information and second indication information, the first indication information indicates the apparatus to enter the PSM mode, the second indication information indicates X wakeup occasion windows for the apparatus in the PSM mode, and X is greater than or equal to 0. The processing module 830 is configured to enter the PSM mode based on the first response message.

Optionally, when X is greater than 0, the second indication information includes a start time point and an end time point of each of the X wakeup occasion windows, or a start time point and duration of each wakeup occasion window.

Optionally, the output module 810 is configured to: if the apparatus has to-be-sent service data, the apparatus outputs the service data in a first wakeup occasion window of the X wakeup occasion windows.

Optionally, the first response message is an attach accept message or a tracking area update accept message.

Optionally, the receiving module 820 is configured to receive information about first duration, where the first duration indicates delay time of the PSM mode. The processing module 830 is configured to: after the first response message is received, enter the PSM mode after the first duration elapses.

Optionally, the receiving module 820 is configured to receive information about second duration, where the second duration indicates duration of the PSM mode. The processing module 830 is configured to: after entering the PSM mode, exit the PSM mode after the second duration elapses.

In an optional example, a person skilled in the art may understand that the apparatus 800 may be specifically the first communication apparatus in the foregoing embodiment, or functions of the first communication apparatus in the foregoing embodiment may be integrated into the apparatus 800. The functions may be implemented by hardware, or may be implemented by hardware executing corresponding software. The hardware or the software includes one or more modules corresponding to the foregoing functions. For example, the receiving module 820 may be a communication interface, for example, a transceiver interface. The apparatus 800 may be configured to perform procedures and/or steps corresponding to the first communication apparatus in the foregoing method embodiments.

FIG. 9 is a schematic block diagram of another apparatus 900 for PSM transmission according to an embodiment of this application. The apparatus 900 includes a receiving module 910 and an output module 920.

The receiving module 910 is configured to receive a first request message, where the first request message is for requesting to enter a PSM mode. The output module 920 is configured to output a first response message, where the first response message includes first indication information and second indication information, the first indication information indicates a first communication apparatus to enter the PSM mode, the second indication information indicates X wakeup occasion windows for the first communication apparatus in the PSM mode, and X is greater than or equal to 0.

Optionally, when X is greater than 0, the second indication information includes a start time point and an end time point of each of the X wakeup occasion windows, or a start time point and duration of each wakeup occasion window.

Optionally, the first response message is an attach accept message or a tracking area update accept message.

Optionally, the output module 920 is configured to output information about first duration, where the first duration indicates delay time of the PSM mode.

Optionally, the output module 920 is configured to output information about second duration, where the second duration indicates duration of the PSM mode.

In an optional example, a person skilled in the art may understand that the apparatus 900 may be specifically the second communication apparatus in the foregoing embodiment, or functions of the second communication apparatus in the foregoing embodiment may be integrated into the apparatus 900. The functions may be implemented by hardware, or may be implemented by hardware executing corresponding software. The hardware or the software includes one or more modules corresponding to the foregoing functions. For example, the receiving module 910 may be a communication interface, for example, a transceiver interface. The apparatus 900 may be configured to perform procedures and/or steps corresponding to the second communication apparatus in the foregoing method embodiments.

It should be understood that the apparatus 800 and the apparatus 900 herein are embodied in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another suitable component that supports the described function.

In embodiments of this application, the apparatus 800 and the apparatus 900 may alternatively be chips or chip systems, for example, system on chips (system on chip, SoC). Correspondingly, the output module 810 may be a transceiver circuit of the chip. This is not limited herein.

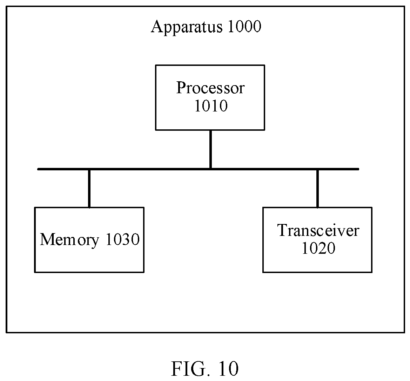

FIG. 10 is a schematic block diagram of still another apparatus 1000 for PSM transmission according to an embodiment of this application. The apparatus 1000 includes a processor 1010, a transceiver 1020, and a memory 1030. The processor 1010, the transceiver 1020, and the memory 1030 communicate with each other through an internal connection path. The memory 1030 is configured to store instructions. The processor 1010 is configured to execute the instructions stored in the memory 1030, to control the transceiver 1020 to send a signal and/or receive a signal.

It should be understood that the apparatus 1000 may be specifically a first communication apparatus or a second communication apparatus in the foregoing embodiments, or functions of the first communication apparatus or the second communication apparatus in the foregoing embodiments may be integrated into the apparatus 1000. The apparatus 1000 may be configured to perform steps and/or procedures corresponding to the first communication apparatus or the second communication apparatus in the foregoing method embodiments. Optionally, the memory 1030 includes a read-only memory and a random access memory, and provides instructions and data for the processor. A part of the memory may further include a non-volatile random access memory. For example, the memory may further store information about a device type. The processor 1010 may be configured to execute the instructions stored in the memory. When the processor executes the instructions, the processor may perform the steps and/or procedures corresponding to the first communication apparatus or the second communication apparatus in the foregoing method embodiments.

It should be understood that, in embodiments of this application, the processor 1010 may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory, and the processor reads instructions in the memory and completes the steps in the foregoing methods in combination with hardware of the processor. To avoid repetition, details are not described herein again.

This application further provides a communication apparatus, including a communication interface and a logic circuit. The communication interface is configured to send a first request message and/or receive a first response message, and the logic circuit is configured to enter a PSM based on the first response message, to perform the method in any possible implementation of the first aspect.

This application further provides another communication apparatus, including a communication interface and a logic circuit. The communication interface is configured to receive a first request message and/or send a first response message, and the logic circuit is configured to transmit a PSM based on the first request message, to perform the method in any possible implementation of the second aspect.

This application further provides still another communication apparatus, including a communication interface and a logic circuit. The communication interface is configured to send a second request message and/or receive a second response message, and the logic circuit is configured to monitor a paging message based on the second response message, to perform the method in any possible implementation of the third aspect.

This application further provides still another communication apparatus, including a communication interface and a logic circuit. The communication interface is configured to receive a second request message and/or send a second response message, and the logic circuit is configured to transmit a monitoring occasion of a paging message based on the second request message, to perform the method in any possible implementation of the fourth aspect.

Embodiments of this application further provide a communication system. The communication system may include a first communication apparatus (the apparatus 800 acts as the first communication apparatus) shown in FIG. 8.

Embodiments of this application further provide a communication system. The communication system may include a second communication apparatus (the apparatus 900 acts as the second communication apparatus) shown in FIG. 9.

Embodiments of this application further provide a communication system. The communication system may include a first communication apparatus (the apparatus 1000 acts as the first communication apparatus) shown in FIG. 10 or a second communication apparatus (the apparatus 1000 acts as the second communication apparatus) shown in FIG. 10.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may be physically separated, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for power saving mode PSM transmission, comprising:

    sending, by a first communication apparatus, a first request message, wherein the first request message is for requesting to enter a PSM mode;
    receiving, by the first communication apparatus, a first response message, wherein the first response message comprises first indication information and second indication information, the first indication information indicates the first communication apparatus to enter the PSM mode, the second indication information indicates X wakeup occasion windows for the first communication apparatus in the PSM mode, and X is greater than or equal to 0; and
    entering, by the first communication apparatus, the PSM mode based on the first response message.

2. The method according to claim 1, wherein when X is greater than 0, the second indication information comprises a start time point and an end time point of each of the X wakeup occasion windows, or a start time point and duration of each wakeup occasion window.

3. The method according to claim 1 or 2, wherein after the entering, by the first communication apparatus, the PSM mode based on the first response message, the method further comprises:
if the first communication apparatus has to-be-sent service data, sending, by the first communication apparatus, the service data in a first wakeup occasion window of the X wakeup occasion windows.

4. The method according to any one of claims 1 to 3, wherein the first response message is an attach accept message or a tracking area update accept message.

5. The method according to any one of claims 1 to 4, wherein the method further comprises:

receiving, by the first communication apparatus, information about first duration, wherein the first duration indicates delay time of the PSM mode; and
the entering, by the first communication apparatus, the PSM mode based on the first response message comprises:
after receiving the first response message, entering, by the first communication apparatus, the PSM mode after the first duration elapses.

6. The method according to any one of claims 1 to 5, wherein the method further comprises:

receiving, by the first communication apparatus, information about second duration, wherein the second duration indicates duration of the PSM mode; and
after entering the PSM mode, exiting, by the first communication apparatus, the PSM mode after the second duration elapses.

7. A method for power saving mode PSM transmission, comprising:

receiving, by a second communication apparatus, a first request message, wherein the first request message is for requesting to enter a PSM mode; and
sending, by the second communication apparatus, a first response message, wherein the first response message comprises first indication information and second indication information, the first indication information indicates a first communication apparatus to enter the PSM mode, the second indication information indicates X wakeup occasion windows for the first communication apparatus in the PSM mode, and X is greater than or equal to 0.

8. The method according to claim 7, wherein when X is greater than 0, the second indication information comprises a start time point and an end time point of each of the X wakeup occasion windows, or a start time point and duration of each wakeup occasion window.

9. The method according to claim 7 or 8, wherein the first response message is an attach accept message or a tracking area update accept message.

10. The method according to any one of claims 7 to 9, wherein the method further comprises:
sending, by the second communication apparatus, information about first duration, wherein the first duration indicates delay time of the PSM mode.

11. The method according to any one of claims 7 to 10, wherein the method further comprises:
sending, by the second communication apparatus, information about second duration, wherein the second duration indicates duration of the PSM mode.

12. An apparatus for power saving mode PSM transmission, comprising:

an output module, configured to output a first request message, wherein the first request message is for requesting to enter a PSM mode;
a receiving module, configured to receive a first response message, wherein the first response message comprises first indication information and second indication information, the first indication information indicates the apparatus to enter the PSM mode, the second indication information indicates X wakeup occasion windows for the apparatus in the PSM mode, and X is greater than or equal to 0; and
a processing module, configured to enter the PSM mode based on the first response message.

13. The apparatus according to claim 12, wherein when X is greater than 0, the second indication information comprises a start time point and an end time point of each of the X wakeup occasion windows, or a start time point and duration of each wakeup occasion window.

14. The apparatus according to claim 12 or 13, wherein the output module is further configured to:
if the apparatus has to-be-sent service data, output, for the apparatus, the service data in a first occasion_window of the X wakeup occasion windows.

15. The apparatus according to any one of claims 12 to 14, wherein the first response message is an attach accept message or a tracking area update accept message.

16. The apparatus according to any one of claims 12 to 15, wherein the receiving module is further configured to:

   receive information about first duration, wherein the first duration indicates delay time of the PSM mode; and after receiving the first response message, the processing module is configured to enter the PSM mode after the first duration elapses.

17. The apparatus according to any one of claims 12 to 16, wherein the receiving module is further configured to:

   receive information about second duration, wherein the second duration indicates duration of the PSM mode; and after entering the PSM mode, the processing module is configured to exit the PSM mode after the second duration elapses.

18. An apparatus for power saving mode PSM transmission, comprising:

   a receiving module, configured to receive a first request message, wherein the first request message is for requesting to enter a PSM mode; and
   an output module, configured to output a first response message, wherein the first response message comprises first indication information and second indication information, the first indication information indicates the first communication apparatus to enter the PSM mode, the second indication information indicates X wakeup occasion windows for the first communication apparatus in the PSM mode, and X is greater than or equal to 0.

19. The apparatus according to claim 18, wherein when X is greater than 0, the second indication information comprises a start time point and an end time point of each of the X wakeup occasion windows, or a start time point and duration of each wakeup occasion window.

20. The apparatus according to claim 18 or 19, wherein the first response message is an attach accept message or a tracking area update accept message.

21. The apparatus according to any one of claims 18 to 20, wherein the output module is configured to:
   output information about first duration, wherein the first duration indicates delay time of the PSM mode.

22. The apparatus according to any one of claims 18 to 21, wherein the output module is configured to:
   output information about second duration, wherein the second duration indicates duration of the PSM mode.

23. A communication system, comprising the apparatus according to any one of claims 12 to 17 and the apparatus according to any one of claims 18 to 22.

24. A computer-readable storage medium, configured to store a computer program, wherein the computer program comprises instructions for implementing the method according to any one of claims 1 to 11.

25. A computer program product, wherein the computer program product comprises computer program code; and when the computer program code is run on a computer, the computer is enabled to implement the method according to any one of claims 1 to 11.

26. A communication apparatus, comprising a communication interface and a logic circuit, wherein the communication interface is configured to send a first request message and/or receive a first response message, and the logic circuit is configured to enter a PSM based on the first response message, to perform the method according to any one of claims 1 to 6.

27. A communication apparatus, comprising a communication interface and a logic circuit, wherein the communication interface is configured to receive a first request message and/or send a first response message, and the logic circuit is configured to transmit a PSM based on the first request message, to perform the method according to any one of claims 7 to 11.

FIG. 1

FIG. 2

300

FIG. 3

400

FIG. 4

500

```
┌─────────────────────┐                          ┌─────────────────────┐
│  First communication │                          │ Second communication │
│      apparatus       │                          │      apparatus       │
└─────────────────────┘                          └─────────────────────┘
          │                                                  │
          │        S501: First request message               │
          │─────────────────────────────────────────────────▶│
          │                                                  │
          │        S502: First response message              │
          │◀─────────────────────────────────────────────────│
          │                                                  │
┌─────────────────────┐                                      │
│ S503: Enter a PSM mode│                                     │
│ based on the first response│                                │
│      message         │                                      │
└─────────────────────┘                                      │
          │                                                  │
```

FIG. 5

FIG. 6

EP 4 336 909 A1

EP 4 336 909 A1

FIG. 7

FIG. 8

FIG. 9

Apparatus 1000

Processor
1010

Memory 1030

Transceiver
1020

FIG. 10

## INTERNATIONAL SEARCH REPORT

| | International application No. |
|---|---|
| | **PCT/CN2022/090002** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; VEN; EPTXT; USTXT; WOTXT; CNKI; 3GPP: 省电模式, 低功率模式, 请求, 响应, 指示, 苏醒, 唤醒, 醒来, 激活, 机会, 时间, 时段, 非陆地网络, 非地面网络, 卫星, 星历, PSM, request+, answer, response, indicat+, wakeup, wake-up, occasion, time, NTN, ephemeris

### C. DOCUMENTS CONSIDERED TO BE RELEVANT

| Category* | Citation of document, with indication, where appropriate, of the relevant passages | Relevant to claim No. |
|---|---|---|
| PX | HUAWEI et al. "Other Aspects to Support IoT in NTN" *3GPP TSG RAN WG1 Meeting #105-e R1-2105530*, 12 May 2021 (2021-05-12), section 2.3 | 1-27 |
| A | CN 112564760 A (NOKIA TECHNOLOGIES OY) 26 March 2021 (2021-03-26) description, paragraphs [0073]-[0305], and figures 1-11 | 1-27 |
| A | CN 102835043 A (SAMSUNG ELECTRONICS CO., LTD.) 19 December 2012 (2012-12-19) entire document | 1-27 |
| A | CN 109309948 A (ZHUHAI MEIZU TECHNOLOGY CO., LTD.) 05 February 2019 (2019-02-05) entire document | 1-27 |
| A | HUAWEI et al. "Other Aspects to Support IoT in NTN" *3GPP TSG RAN WG1 Meeting #103-e R1-2008320*, 01 November 2020 (2020-11-01), entire document | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 July 2022** | **25 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090002**

| Patent document cited in search report | | | Publication date (day/month/year) | Patent family member(s) | | | Publication date (day/month/year) |
|---|---|---|---|---|---|---|---|
| CN | 112564760 | A | 26 March 2021 | US | 2021092781 | A1 | 25 March 2021 |
|  |  |  |  | EP | 3799331 | A1 | 31 March 2021 |
| CN | 102835043 | A | 19 December 2012 | EP | 2553838 | A2 | 06 February 2013 |
|  |  |  |  | ES | 2814302 | T3 | 26 March 2021 |
|  |  |  |  | WO | 2011122858 | A2 | 06 October 2011 |
|  |  |  |  | CN | 107257257 | A | 17 October 2017 |
|  |  |  |  | US | 2011243570 | A1 | 06 October 2011 |
|  |  |  |  | KR | 20110109738 | A | 06 October 2011 |
| CN | 109309948 | A | 05 February 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110507782